(19) Europäisches Patentamt
European Patent Office
Office européen des brevets

(11) EP 2 862 899 A1

(12) # EUROPÄISCHE PATENTANMELDUNG

(43) Veröffentlichungstag:
**22.04.2015 Patentblatt 2015/17**

(21) Anmeldenummer: **13189525.2**

(22) Anmeldetag: **21.10.2013**

(51) Int Cl.:
***C08L 75/16*** *(2006.01)*
***C08K 5/47*** *(2006.01)*
***C08G 18/28*** *(2006.01)*
***C04B 26/06*** *(2006.01)*
***C08F 290/14*** *(2006.01)*
***C08G 18/76*** *(2006.01)*
***C08G 18/32*** *(2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **HILTI Aktiengesellschaft**
**9494 Schaan (LI)**

(72) Erfinder:
- **Leitner, Michael**
  **86899 Landsberg (DE)**
- **Wieland, Philipp**
  **80935 München (DE)**
- **Pfeil, Armin**
  **86916 Kaufering (DE)**
- **Bürgel, Thomas**
  **86899 Landsberg am Lech (DE)**
- **Khalyavina, Anna**
  **86159 Augsburg (DE)**
- **Gnaß, Beate**
  **86368 Gersthofen (DE)**

(74) Vertreter: **Hilti Aktiengesellschaft**
**Corporate Intellectual Property**
**Feldkircherstrasse 100**
**Postfach 333**
**9494 Schaan (LI)**

(54) **Harzmischung auf Basis eines Vinylesterurethanharzes, Verfahren zu deren Herstellung und deren Verwendung**

(57) Es wird ein Verfahren zur Herstellung einer Harzmischung, welche ein Vinylesterurethanharz, Phenothiazin oder ein Derivat davon, einen Beschleuniger und einen phenolischen Polymerisationsinhibitor enthält, wobei das Verfahren folgende Schritte umfasst: (i) Bereitstellen einer Primärzusammensetzung enthaltend das Vinylesterurethanharz und Phenothiazin oder ein Derivat davon; (ii) Zugeben eines Beschleunigers zu der nach Schritt (i) erhaltenen Primärzusammensetzung; und (iii) Zugeben eines phenolischen Polymerisationsinhibitors zu der nach Schritt (ii) erhaltenen Zusammensetzung, wobei die Harzmischung erhalten wird, sowie die Verwendung der nach diesem Verfahren hergestellten Harzmischung beschrieben.

EP 2 862 899 A1

Printed by Jouve, 75001 PARIS (FR)

## Beschreibung

Die vorliegende Erfindung betrifft ein Verfahren zur Herstellung von Harzmischungen auf Basis eines Vinylesterurethanharzes genauer ein Verfahren zur Herstellung von Harzmischungen auf Basis eines Vinylesterurethanharzes mit verbesserter Gelzeitstabilität, die nach diesem Verfahren hergestellten Vinylesterurethanharze und ihre Verwendung als radikalisch aushärtbare Bindemittel, insbesondere für die chemische Befestigung.

Die Verwendung von Reaktionsharzmörteln auf Basis radikalisch härtbarer Verbindungen als Bindemittel ist seit langem bekannt. Im Bereich der Befestigungstechnik hat sich die Verwendung von Harzmischungen als organisches Bindemittel für die chemische Befestigungstechnik, z.B. als Dübelmasse, durchgesetzt. Es handelt sich dabei um Verbundmassen, die als Mehrkomponenten-Systeme konfektioniert sind, wobei eine Komponente die Harzmischung und die andere Komponente das Härtungsmittel enthält. Andere, übliche Bestandteile, wie beispielsweise Lösungsmittel einschließlich Reaktivlösungsmittel (Reaktivverdünner), können in der einen und/oder der anderen Komponente enthalten sein. Durch Vermischen der beiden Komponenten wird dann durch Radikalbildung die Härtungsreaktion, d.h. die Polymerisation, in Gang gebracht und das Harz zum Duromeren gehärtet. Als radikalisch härtbare Verbindungen werden häufig, insbesondere für die chemische Befestigungstechnik, Vinylesterharze, Vinylesterurethanharze und ungesättigte Polyesterharze eingesetzt.

Als Basisharze werden aufgrund ihrer vorteilhaften Eigenschaften Vinylesterharze und insbesondere Vinylesterurethanharze eingesetzt, die durch monomere oder polymere aromatische Diisocyanate und Hydroxy-substituierte Methacrylate, wie Hydroxyalkylmethacrylat erhältlich sind. Die EP 0713015 B1 beispielsweise beschreibt Dübelmassen mit ungesättigten Polyesterharzen, Vinylesterharzen und Vinylesterurethanharzen als Basisharze.

Die Gelzeitdrift von Harzmischungen aber auch von anorganisch gefüllten Harzmischungen ist ein bekanntes Problem, das auftritt, wenn diese gelagert werden. Häufig wird beobachtet, dass sich die Gelzeit nach einer bestimmten Lagerzeit über einen längeren Zeitraum von etwa zwei Monaten des Systems deutlich verändert hat. Man spricht dann unter anderem von verminderter Lagerstabilität. Dies wirkt sich unmittelbar auf die Verarbeitungszeit der Harzmischungen oder diese enthaltenden Massen auf, so dass die tatsächliche Verarbeitungszeit nicht mehr mit der von den Herstellern angegebenen Verarbeitungszeit übereinstimmt. Sie ist im Allgemeinen kürzer. Dies ist auf unterschiedliche Ursachen zurückzuführen, wie etwa die Bestandteile der Harzmischungen und daraus hergestellter Massen, welche untereinander wechselwirken oder miteinander reagieren können.

Unter anderem aus der EP 1716204 A1 und der EP 1716205 A1 ist bekannt, dass ungesättigte Polyesterharz- und Vinylesterharz-Zusammensetzungen einen zum Teil recht erheblichen Gelzeitdrift, insbesondere nach längerer Lagerung aufweisen. Dementsprechend schlägt die EP 1716204 A1 ein Verfahren vor, mit dem ungesättigte Polyesterharz oder Vinylesterharz enthaltende Zusammensetzungen bereit gestellt werden können, die, verglichen mit den Harzzusammensetzungen, die nach den bis dahin bekannten Herstellungsverfahren erhältlich waren, eine deutlich geringere Gelzeitdrift aufweisen. Gemäß der EP 1716205 A1 kann neben der aromatischen Aminoverbindung noch eine N-Oxyl-Verbindung zugeben werden. Den genannten Schriften entnimmt der Fachmann, dass zum Erhalt einer ungesättigten Polyesterharz oder Vinylesterharz enthaltenden Zusammensetzung mit geringer Gelzeitdrift die zur Einstellung der Gelzeit verwendeten bestimmten phenolischen Inhibitoren und aromatischen Aminoverbindungen in einer ganz bestimmten Reihenfolge dem Basisharz zugegeben werden müssen. Es wird für den Erfolg als entscheidend angesehen, dass zuerst durch Zugeben eines ganz bestimmten phenolischen Inhibitors eine ein ungesättigtes Polyesterharz oder Vinylesterharz enthaltende Primärzusammensetzung bereitgestellt wird, zu der dann eine aromatische Aminoverbindung und gegebenenfalls zusätzlich eine N-Oxyl-Verbindung gegeben wird.

Nachteilig an den eben beschriebenen Harzmischungen ist, dass die Gelzeiten nach Lagerung in einem weiten Bereich streuen und die Gelzeitdrift entgegen den Offenbarungen zum Teil doch noch recht hoch sind. Dementsprechend konnte auch durch die beschriebenen Verfahren das Problem der Lagerstabilität, insbesondere für Harzmischungen, die über einen Zeitraum von mehreren Monaten gelagert werden, nicht zufriedenstellend gelöst werden.

Es besteht daher weiterhin Bedarf an Harzmischungen, insbesondere solche für die chemische Befestigungstechnik, deren Gelzeit relativ stabil ist, d.h. deren Gelzeitdrift stark reduziert ist und in einem sehr engen Bereich liegt.

Entgegen den Erwartungen und entgegen der Lehren aus der EP 1716204 A1 und EP 1716205 A1 konnten die Erfinder zeigen, dass überraschender Weise die Gelzeitdrift nochmals verringert und damit die Lagerstabilität erhöht werden kann, wenn bei der Herstellung einer Harzmischung auf Basis eines Vinylesterurethanharzes, insbesondere eines Urethan(meth)acrylatharzes während oder nach der der Herstellung des Basisharzes zunächst Phenothiazin oder ein Derivat davon zugegeben wird, und anschließend zu der erhaltenen Zusammensetzung eine aromatische Aminoverbindung gegeben wird.

Zum besseren Verständnis der Erfindung werden die folgenden Erläuterungen der hierin verwendeten Terminologie als sinnvoll erachtet. Im Sinne der Erfindung bedeutet:

- *"Basisharz"* die reine, härtende bzw. härtbare Verbindung, die für sich oder mit Reaktionsmitteln, wie Härter, Beschleuniger und dergleichen (nicht im Basisharz enthalten), durch Polymerisation härten; die härtbaren Verbindungen können Monomere, Dimere, Oligomere und Präpolymere sein;

- *"Harz-Masterbatch"* das Produkt der Herstellung des Basisharzes nach der Synthese (ohne Isolierung des Basisharzes) welches Reaktivverdünner, Stabilisatoren und Katalysatoren enthalten kann;

- *"Harzmischung"* eine Mischung aus dem Harz-Masterbatch und Beschleunigern sowie Stabilisatoren und ggf. weiteren Reaktivverdünnern; dieser Begriff wird gleichbedeutend mit dem Begriff *"organisches Bindemittel"* verwendet;

- *"Reaktionsharzmörtel"* eine Mischung aus Harzmischung und anorganischen Zuschlagstoffen;

- *"Beschleuniger"* eine zur Beschleunigung der Polymerisationsreaktion (Härtung) fähige Verbindung, die dazu dient, die Bildung des Radikalstarters zu beschleunigen;

- *"Polymerisationsinhibitor"* eine zur Inhibierung der Polymerisationsreaktion (Härtung) fähige Verbindung, die einmal dazu dient, die Polymerisationsreaktion und damit ein unerwünschtes vorzeitiges Polymerisieren der radikalisch polymerisierbaren Verbindung während der Lagerung zu vermeiden, wobei diese Verbindungen üblicherweise in so geringen Mengen eingesetzt werden, dass die Gelzeit nicht beeinflusst wird; andererseits dient der Polymerisationsinhibitor dazu, die Polymerisationsreaktion unmittelbar nach der Zugabe des Härtungsmittels zu verzögern, wobei die Verbindungen üblicherweise in solchen Mengen eingesetzt werden, dass die Gelzeit beeinflusst wird;

- *"Reaktivverdünner"* flüssige oder niedrigviskose Basisharze, welche andere Basisharze, den Harz-Masterbatch oder die Harzmischung verdünnen und dadurch die zu deren Applikation notwendige Viskosität verleihen, zur Reaktion mit dem Basisharz befähigte funktionelle Gruppen enthalten und bei der Polymerisation (Härtung) zum überwiegenden Teil Bestandteil der gehärteten Masse (Mörtel) werden; auch co-polymerisierbares Monomer genannt;

- *"Gelzeit"* für ungesättigte Polyester- oder Vinyl-Harze, die gewöhnlich mit Peroxiden gehärtet werden, entspricht die Zeit der Härtungsphase des Harzes der Gelzeit, in der sich die Temperatur des Harzes von +25°C auf +35°C erhöht. Dies entspricht in etwa dem Zeitraum, in dem sich die Fluidität oder Viskosität des Harzes noch in so einem Bereich befindet, dass das Reaktionsharz bzw. die Reaktionsharzmasse noch einfach ver- bzw. bearbeitet werden kann;

- *"Gelzeitdrift"* (für einen bestimmten ausgewählten Zeitraum, zum Beispiel 30 oder 60 Tage), bezeichnet das Phänomen, dass, wenn die Härtung zu einem anderen Zeitpunkt als zu dem Referenz-Standardzeitpunkt der Härtung, beispielsweise 24 Stunden nach der Herstellung des Reaktionsharzes, bzw. der Reaktionsharzmasse, die beobachtete Gelzeit von der zum Zeitpunkt der Referenz abweicht;

- *"(Meth)acryl.../...(meth)acryl...",* dass sowohl die "Methacryl.../...methacryl..."- als auch die "Acryl.../...acryl..."-Verbindungen umfasst sein sollen.

Zur Herstellung des Basisharzes werden die erforderlichen Ausgangsverbindungen gegebenenfalls zusammen mit Katalysatoren und Lösungsmitteln, insbesondere Reaktivverdünnern, in einen Reaktor gegeben und miteinander zur Reaktion gebracht. Nach Beendigung der Reaktion und gegebenenfalls bereits zu Beginn der Reaktion können dem Reaktionsgemisch Polymerisationsinhibitoren zur Verhinderung der vorzeitigen Polymerisation, auch Stabilisatoren genannt, zugegeben werden, wodurch der sogenannte Harz-Masterbatch erhalten wird. Zu dem Harz-Masterbatch werden häufig Beschleuniger für die Härtung des Basisharzes, gegebenenfalls zusätzliche Polymerisationsinhibitoren, die gleich oder ungleich dem Stabilisator für die Lagerstabilität sein können, zur Einstellung der Gelzeit, und gegebenenfalls weiteres Lösungsmittel, insbesondere Reaktivverdünner, gegeben, wodurch die Harzmischung erhalten wird. Diese Harzmischung wird zur Einstellung verschiedener Eigenschaften, wie der Rheologie und der Konzentration des Basisharzes, mit anorganischen Zuschlagstoffen versetzt, wodurch der Reaktionsharzmörtel erhalten wird.

Eine für die Anwendung in der chemischen Befestigungstechnik bevorzugte Harzmischung enthält dementsprechend mindestens ein Basisharz, mindestens einen Reaktivverdünner, mindestens einen Beschleuniger und mindestens einen Polymerisationsinhibitor. Ein Reaktionsharzmörtel enthält bevorzugt neben der eben beschriebenen Harzmischung organische und/oder anorganische Zuschlagstoffe, wobei anorganische Zuschlagstoffe besonders bevorzugt sind, wie sie nachfolgend näher beschrieben werden.

Ein erster Gegenstand der Erfindung betrifft ein Verfahren zur Herstellung einer Harzmischung, welche ein Vinylesterurethanharz, Phenothiazin oder ein Derivat davon, einen phenolischen Polymerisationsinhibitor und mindestens eine aromatische Aminoverbindung enthält, wobei das Verfahren folgende Schritte umfasst:

(i) Bereitstellen einer Primärzusammensetzung enthaltend das Vinylesterurethanharz und Phenothiazin oder ein Derivat davon;

(ii) Zugeben eines Beschleunigers zu der nach Schritt (i) erhaltenen Primärzusammensetzung; und

(iii) Zugeben eines phenolischen Polymerisationsinhibitors zu der nach Schritt (ii) erhaltenen Zusammensetzung, wobei die Harzmischung erhalten wird.

Dementsprechend erfolgt die Herstellung der Vinylesterurethanharz-Zusammensetzung in einer einfachen Mehrstufen-Eintopfreaktion, aus der ein für alle Anwendungsgebiete direkt einsetzbares und lagerstabiles Produkt, nämlich die Harzmischung, resultiert.

**Stufe (I)**

Erfindungsgemäß ist das Basisharz ein Vinylesterurethanharz, insbesondere ein Urethan(meth)acrylatharz. Urethan(meth)acrylatharze sind flüssige bis feste bzw. in Lösungsmitteln, wie Reaktivverdünnern, lösliche, lineare oder verzweigte Polyurethane, die Acrylat- und/oder Methacrylatgruppen enthalten. Verbindungen dieses Typs und deren Herstellung sind bekannt (vgl. z. B. DE 2312559 A1, DE 3536246 A1, EP 0123081 A1, EP 0002129 A1, US 3629187 B, DE 19902685 A1, EP 0684906 A1, DE 4111828 A1 EP 0044352 A1 und DE 19961342 A1und die darin herangezogene Literatur). Vinylesterurethanharzekönnen durch radikalische Polymerisation bzw. Copolymerisation mit einem Reaktivverdünner vernetzt bzw. ausgehärtet werden. Selbstverständlich können auch Gemische aus geeigneten Monomeren verwendet werden.

Erfindungsgemäß können die Vinylesterurethanharze, insbesondere Urethan(meth)acrylatharze, linear oder verzweigt, bevorzugt linear sein. Bevorzugt sind Urethan(meth)acrylatharze auf der Basis aromatischer Isocyanate, worunter lineare besonders bevorzugt sind.

In einer Ausführungsform der Erfindung wird für die Stufe (I) des erfindungsgemäßen Verfahrens der Harz-Masterbatch durch Umsetzen einer Isocyanatverbindung mit mindestens einer hydroxyfunktionalisierten (Meth)acrylatverbindung in Anwesenheit des Katalysators und gegebenenfalls eines Reaktivverdünners erhalten.

Als Isocyanate können aliphatische (cyclische oder lineare) und/oder aromatische di- oder höherfunktionelle Isocyanate bzw. Präpolymere davon verwendet werden. Die Verwendung solcher Verbindungen dient der Erhöhung der Benetzungsfähigkeit und damit der Verbesserung der Adhäsionseigenschaften. Bevorzugt sind aromatische di- oder höherfunktionelle Isocyanate bzw. Präpolymere davon, wobei aromatische di- oder höherfunktionelle Präpolymere besonders bevorzugt sind. Beispielhaft können Toluylendiisocyanat (TDI), Diisocyanatodiphenylmethan (MDI) und polymeres Diisocyanatodiphenylmethan (pMDI) zur Erhöhung der Kettenversteifung und Hexandiisocyanat (HDI) und Isophorondiisocyanat (IPDI), welche die Flexibilität verbessern, sowie TDI und HDI trimere genannt werden, worunter MDI und pMDI besonders bevorzugt sind und pMDI am stärksten bevorzugt ist.

Als hydroxyfunktionalisierte (Meth)acrylverbindungen sind Acrylsäure und am Kohlenwasserstoffrest substituierte Acrylsäuren wie Methacrylsäure, hydroxylgruppenhaltige Ester der (Meth)acrylsäure mit mehrwertigen Alkoholen, Pentaerythrittri(meth)acrylat, Glyceroldi(meth)acrylat, wie Trimethylolpropandi(meth)acrylat, Neopentylglycolmono(meth)acrylat geeignet. Bevorzugt sind (Meth)acrylsäurehydroxylalkylester, wie Hydroxyethyl(meth)acrylat, 2-Hydroxypropyl(meth)acrylat, 2-Hydroxybutyl(meth)acrylat, 3-Hydroxybutyl(meth)acrylat, 2-Hydroxycyclohexyl(meth)acrylat, Glycerol-1,3-di(meth)acrylat, Polyoxyethylen(meth)acrylat und Polyoxypropylen(meth)acrylat, zumal solche Verbindungen der sterischen Hinderung der Verseifungsreaktion dienen.

Die hydroxyfunktionalisierte (Meth)acrylatverbindung wird bevorzugt in solche einer Menge eingesetzt, dass pro Mol Isocyanatgruppe mindestens ein Mol der hydroxyfunktionalisierten (Meth)acrylatverbindung eingesetzt wird. Gewöhnlich wird ein leichter Überschuss an der hydroxyfunktionalisierten (Meth)acrylatverbindung eingesetzt, um eine nahezu vollständige Reaktion zu gewährleisten, so dass nur ein äußerst geringer Anteil an freien Isocyanatgruppen nach der Umsetzung verbleibt. Damit soll unter anderem verhindert werden, dass die noch freien Isocyanatgruppen mit dem zur Herstellung der Harzmischung gegebenenfalls zuzugebenden Reaktivverdünner bei der Aushärtung des Harzes co-polymerisieren.

Alternativ kann erfindungsgemäß die hydroxyfunktionalisierte (Meth)acrylatverbindung in einem deutlichen Überschuss eingesetzt werden, wobei der nicht mit der Isocyanatverbindung reagierende Teil als Reaktivverdünner für die Umsetzung sowie für das gebildete Vinylesterurethanharz, insbesondere Urethan(meth)acrylatharz fungiert.

Alternativ kann als Isocyanatverbindung ein Zwischenprodukt verwendet werden, das durch Umsetzen der Isocyanatverbindung mit mindestens einer di- oder höherfunktionellen Hydroxyverbindung in Anwesenheit des Katalysators und gegebenenfalls eines Reaktivverdünners erhältlich ist.

Als di- oder höherfunktionelle Hydroxyverbindungen sind geeignet zwei- oder höherwertige Alkohole, z. B. Folgeprodukte des Ethylen- bzw. Propylenoxids, wie Ethandiol, Di- bzw. Triethylenglycol, Propandiol, Dipropylenglycol,

andere Diole, wie 1,4-Butandiol, 1,6-Hexandiol, Neopentylglycol, Diethanolamin, weiter Bisphenol-A bzw. -F bzw. deren Oxethylierungs- und/oder Hydrierungs- bzw. Halogenierungsprodukte, höherwertige Alkohole, wie z. B. Glycerin, Trimethylolpropan, Hexantriol und Pentaerythrit, hydroxygruppenhaltige Polyether, z. B. Oligomere aliphatischer oder aromatischer Oxirane und/oder höherer cyclischer Ether, z. B. Ethylenoxid, Propylenoxid, Styroloxid und Furan, Polyether, die in der Hauptkette aromatische Struktureinheiten enthalten, z. B. die des Bisphenol A bzw. F, hydroxygruppenhaltige Polyester auf Basis der obengenannten Alkohole bzw. Polyether und Dicarbonsäuren bzw. ihrer Anhydride, z. B. Adipinsäure, Phthalsäure, Tetra- bzw. Hexahydrophthalsäure, Hetsäure, Maleinsäure, Fumarsäure, Itaconsäure, Sebacinsäure und dergleichen. Besonders bevorzugt sind Hydroxyverbindungen mit aromatischen Struktureinheiten zur Kettenversteifung bzw. Erhöhung der Wärmeformbeständigkeit (WFB) des Harzes, Hydroxyverbindungen, die ungesättigte Struktureinheiten enthalten, wie Fumarsäure, zur Erhöhung der Vernetzungsdichte, verzweigte bzw. sternförmige Hydroxyverbindungen, insbesondere drei- bzw. höherwertige Alkohole und/ oder Polyether bzw. Polyester, die deren Struktureinheiten enthalten, verzweigte bzw. sternförmige Urethan(meth)acrylate zur Erzielung niedrigerer Viskosität der Harze bzw. ihrer Lösungen in Reaktivverdünnern und höherer Reaktivität und Vernetzungsdichte.

Die Menge der optional zu verwendenden weiteren di- oder höherfunktionellen Hydroxyverbindung kann sehr stark variieren, solange ein Überschuss an Isocyanatgruppen verbleibt. Das Molverhältnis zwischen den Hydroxygruppen der Hydroxyverbindung und der Isocyanatgruppen ist im Allgemeinen größer als 0,01, stärker bevorzugt größer als 0,05 und noch stärker bevorzugt größer als 0,1. Das Molverhältnis zwischen den Hydroxylgruppen der Hydroxyverbindung und den Isocyanatgruppen ist bevorzugt kleiner als 0,95, stärker bevorzugt kleiner als 0,9 und noch stärker bevorzugt kleiner als 0,7.

Besonders bevorzugt wird der Harz-Masterbatch durch Mischen einer Isocyanatverbindung mit dem Katalysator und gegebenenfalls mit mindestens einer weiteren di- oder höherfunktionellen Hydroxyverbindung, um eine Reaktion zwischen der Isocyanatverbindung und der Hydroxyverbindung zu erlauben und um ein erstes Zwischenprodukt zu erhalten, und anschließendes Zugeben der hydroxyfunktionalisierten (Meth)acrylatverbindung, um eine Reaktion zwischen den Zwischenprodukt und der hydroxyfunktionalisierten (Meth)acrylatverbindung zu erlauben und um das Vinylesterurethanharz, insbesondere Urethan(meth)acrylatharz zu erhalten, erhalten. Bevorzugt werden die jeweiligen Umsetzungen bei einer Temperatur zwischen 20°C und 90°C durchgeführt.

Das erhaltene Vinylesterurethanharz hat jeweils bevorzugt ein Molekulargewicht Mn im Bereich von 500 bis 3000 Dalton, stärker bevorzugt 500 bis 1500 Dalton (nach ISO 13885-1). Das Vinylesterurethanharzhat einen Säurewert im Bereich von 0 bis 50 mg KOH/g Harz, bevorzugt im Bereich von 0 bis 30 mg KOH/g Harz (nach ISO 2114-2000).

Diese Harze können gemäß dem Fachmann bekannten Verfahren modifiziert werden, um zum Beispiel geringere Säurezahlen, Hydroxidzahlen oder Anhydridzahlen zu erreichen, oder durch das Einbringen von flexiblen Einheiten in das Grundgerüst flexibler gemacht werden, und dergleichen.

Darüber hinaus kann das Harz noch andere reaktive Gruppen, die mit einem Radikalinitiator, wie Peroxiden, polymerisiert werden können, enthalten, zum Beispiel reaktive Gruppen, die von der Itaconsäure, Citraconsäure und allylischen Gruppen und dergleichen abgeleitet sind.

Zur Stabilisierung gegen vorzeitige Polymerisation der Monomere sowie des erhaltenen Vinylesterurethanharzes enthält die Harzmischung erfindungsgemäß einen Polymerisationsinhibitor, wie er nachfolgend näher erläutert ist. Der Polymerisationsinhibitor ist hierzu bevorzugt in einer Menge von 0,0005 bis 2 Gew.-%, stärker bevorzugt 0,01 bis 1 Gew.-% in der Harzmischung enthalten.

Der Polymerisationsinhibitor kann vor oder während der Umsetzung zum Basisharz dem Reaktionsgemisch, d.h. dem Harz-Masterbatch zugegeben werden.

Erfindungsgemäß ist der Polymerisationsinhibitor Phenothiazin oder ein Derivat davon. Sowohl an dem Schwefelatom und/oder an dem Stickstoffatom und/oder an ein oder mehreren der Kohlenstoffatome des Phenothiazins als Grundkörper können Reste gebunden sein. Dabei kommen im Prinzip Reste in Frage, bevorzugt jedoch Alkyl- und Arylreste. Mögliche Phenothiazin-Derivate haben die Grundstruktur des Phenothiazins

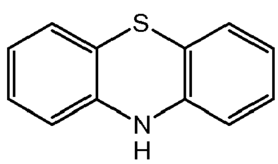

Besonders bevorzugte Phenothiazin-Derivate werden durch die nachstehenden Strukturformeln wiedergegeben:

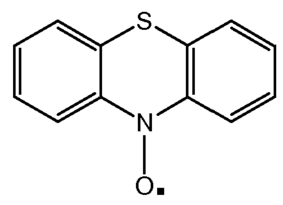

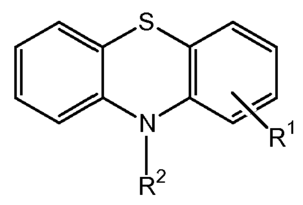

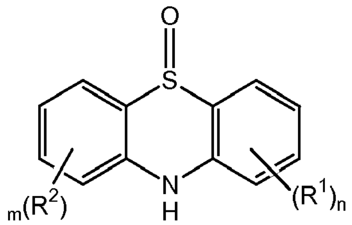

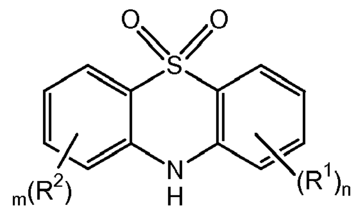

Darüber hinaus können auch oligomere Phenothiazin-Derivate der folgenden Struktur verwendet werden:

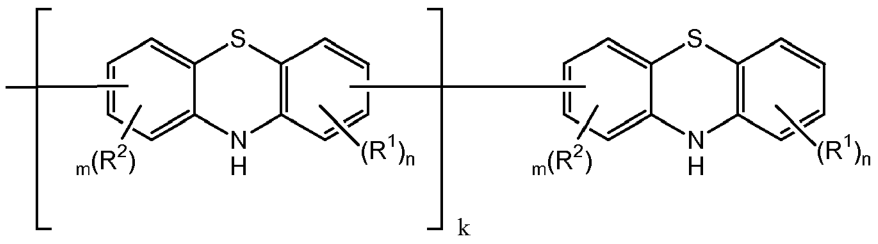

Bei den vorstehenden Strukturformeln können $R^1$ und $R^2$ gleich oder verschieden, H, Halogen, $C_1$-$C_{20}$-Alkyl oder Aryl, $-SO_3H$ oder $-SO_3^-M^+$ sein, mit m = 1 bis 4, n = 1 bis 4 und k = 1 bis 8.

In einer bevorzugten Ausführungsform wird der Harzmischung zusätzlich zu dem Phenothiazin oder einem Derivat davon ein stabiles N-Oxyl-Radikal als weiterer nicht-phenolischer Polymerisationsinhibitor gegeben, um die Licht- und/oder UV-Stabilität zu erhöhen und ggf. die Gelzeit einzustellen. Alternativ kann der weitere nicht-phenolische Polymerisationsinhibitor auch erst in oder nach Schritt (iii) zugegeben werden.

Als N-Oxyl-Radikale werden bevorzugt solche verwendet, wie sie in der DE 199 56 509 A1 beschrieben sind. Geeignete stabile N-Oxyl-Radikale können unter 1-Oxyl-2,2,6,6-tetramethylpiperidin, 1-Oxyl-2,2,6,6-tetramethylpiperidin-4-ol (ebenso als TEMPOL bezeichnet), 1-Oxyl-2,2,6,6-tetramethylpiperidin-4-on (ebenso als TEMPON bezeichnet), 1-Oxyl-2,2,6,6-tetramethyl-4-carboxyl-piperidin (ebenso als 4-Carboxy-TEMPO bezeichnet), 1-Oxyl-2,2,5,5-tetramethylpyrrolidin, 1-Oxyl-2,2,5,5-tetramethyl-3-carboxylpyrrolidin (ebenso als 3-Carboxy-PROXYL bezeichnet), Aluminium-N-nitrosophenylhydroxylamin, Diethylhydroxylamin ausgewählt werden. Ferner sind geeignete N-Oxyl-Radikale Oxime, wie Acetaldoxim, Acetonoxim, Methylethylketoxim, Salicyloxim, Benzoxim, Glyoxime, Dimethylglyoxim, Aceton-O-(benzyloxycarbonyl)oxim, oder Indolin-N-Oxyl-Radikale, wie 2,3-Dihydro-2,2-diphenyl-3-(phenylimino)-1H-indol-1-oxylnitroxid, oder β-phosphorylierte N-Oxyl-Radikale, wie 1-(Diethoxyphosphinyl)-2,2-dimethylpropyl-1,1-dimethylmethyl-nitroxid, und dergleichen. In diesem Zusammenhang wird auf die DE 199 56 509 A1 verwiesen, deren Inhalt hiermit in die Anmeldung aufgenommen wird. Die *N*-Oxyl-Radikale können alleine oder als Gemisch verwendet werden.

In einer bevorzugten Ausführungsform der Erfindung ist der Polymerisationsinhibitor aus der Gruppe ausgewählt, die aus Piperidinyl-N-oxyl-, Tetrahydropyrrol-N-oxyl-, Indolin-N-oxyl-, β-phosphorylierten N-Oxyl-Radikalen und 4-Hydroxy-3,5-di-tert-butyltoluol besteht.

Das stabile N-Oxyl-Radikal wird bevorzugt in einer Menge von 0,005 bis 2 Gew.-%, stärker bevorzugt von 0,05 bis 1 Gew.-%, bezogen auf die Harzmischung, zugegeben.

<u>**Stufe (II)**</u>

Bevorzugt wird die Härtung des Harzbestandteils mit einem Radikalinitiator, etwa einem Peroxid initiiert.

Dementsprechend wird der Primärzusammensetzung in Stufe (II) des erfindungsgemäßen Verfahrens ein Beschleuniger zugegeben. Hierdurch werden schnellhärtende Reaktionsharzmörtel erhalten, die bei Raumtemperatur aushärten (kalthärtend). Geeignete Beschleuniger, die gewöhnlich der Harzmischung zugegeben werden, sind dem Fachmann bekannt. Diese sind beispielsweise Amine, bevorzugt tertiäre Amine und/oder Metallsalze.

Geeignete Amine sind unter folgenden Verbindungen ausgewählt, die beispielsweise in der Anmeldung US 2011071234 A1 beschrieben sind: Dimethylamin, Trimethylamin, Ethylamin, Diethylamin, Triethylamin, n-Propylamin, Di-n-propylamin, Tri-n-propylamin, Isopropylamin, Diisopropylamin, Triisopropylamin, n-Butylamin, Isobutylamin, tert-Butylamin, Di-n-butylamin, Diisobutylamin, Tri-isobutylamin, Pentylamin, Isopentylamin, Diisopentylamin, Hexylamin, Octylamin, Dodecylamin, Laurylamin, Stearylamin, Aminoethanol, Diethanolamin, Triethanolamin, Aminohexanol, Ethoxyaminoethan, Dimethyl-(2-chloroethyl)amin, 2-Ethylhexylamin, Bis-(2-chloroethyl)amin, 2-Ethylhexylamin, Bis-(2-ethylhexyl)amin, N-Methylstearylamin, Dialkylamine, Ethylendiamin, N,N'-Dimethylethylendiamin, Tetramethylethylendiamin, Diethylentriamin, Permethyldiethylentriamin, Triethylentetramin, Tetraethylenpentamin, 1,2-Diaminopropan, Di-propylentriamin, Tripropylentetramin, 1,4-Diaminobutan, 1,6-Diaminohexan, 4-Amino-1-diethylaminopentan, 2,5-Diamino-2,5-dimethylhexan, Trimethylhexamethylendiamin, N,N-Dimethylaminoethanol, 2-(2-Diethylaminoethoxy)ethanol, Bis-(2-hydroxyethyl)-oleylamin, Tris-[2-(2-hydroxy-ethoxy)-ethyl]amin, 3-Amino-1-propanol, Methyl-(3-aminopropyl)ether, Ethyl-(3-aminopropyl)ether, 1,4-Butandiol-bis(3-aminopropylether), 3-Dimethylamino-1-propanol, 1-Amino-2-propanol, 1-Diethylamino-2-propanol, Diisopropanolamin, Methyl-bis-(2-hydroxypropyl)-amin, Tris-(2-hydroxypropyl)amin, 4-Amino-2-butanol, 2-Amino-2-methylpropanol, 2-Amino-2-methyl-propandiol, 2-Amino-2-hydroxymethylpropandiol, 5-Aiethylamino-2-pentanon, 3-Methylaminopropionsäurenitril, 6-Aminohexansäure, 11-Aminoundecansäure, 6-Aminohexansäureethylester, 11-Aminohexansäure-isopropylester, Cyclohexylamin, N-Methylcyclohexylamin, N,N-Dimethylcyclohexylamin, Dicyclohexylamin, N-Ethylcyclohexylamin, N-(2-Hydroxyethyl)-cyclohexylamin, N,N-Bis-(2-hydroxyethyl)-cyclohexylamin, N-(3-Aminopropyl)-cyclohexylamin, Aminomethylcyclohexan, Hexahydrotoluidin, Hexahydrobenzylamin, Anilin, N-Methylanilin, N,N-Dimethylanilin, N,N-Diethylanilin, N,N-Di-propylanilin, iso-Butylanilin, Toluidine, Diphenylamin, Hydroxyethylanilin, Bis-(hydroxyethyl)anilin, Chloranilin, Aminophenole, Aminobenzoesäuren und deren Ester, Benzylamin, Dibenzylamin, Tribenzylamin, Methyldibenzylamin, 2-Phenylethylamin, Xylidin, Diisopropylanilin, Dodecylanilin, Aminonaphthalin, N-Methylaminonaphthalin, N,N-Dimethylaminonaphthalin, N,N-Dibenzylnaphthalin, Diaminocyclohexan, 4,4'-Diamino-dicyclohexylmethan, Diaminodimethyl-dicyclohexylmethan, Phenylendiamin, Xylylendiamin, Diaminobiphenyl, Naphthalindiamine, Toluidine, Benzidine, 2,2-Bis-(aminophenyl)-propan, Aminoanisole, Amino-thiophenole, Aminodiphenylether, Aminocresole, Morpholin, N-Methylmorpholin, N-Phenylmorpholin, Hydroxyethylmorpholin, N-Methylpyrrolidin, Pyrrolidin, Piperidin, Hydroxyethylpiperidin, Pyrrole, Pyridine, Chinoline, Indole, Indolenine, Carbazole, Pyrazole, Imidazole, Thiazole, Pyrimidine, Chinoxaline, Aminomorpholin, Dimorpholinethan, [2,2,2] -Diazabicyclooctan und N,N-Dimethyl-p-toluidin.

Bevorzugte Amine sind Anilin-Derivate und N,N-Bisalkylarylamine, wie N,N,-Dimethylanilin, N,N-Diethylanilin, N,N-Dimethyl-p-toluidin, N,N-Bis(hydroxyalkyl)arylamine, N,N-Bis(2-hydropxyethyl)aniline, N,N-Bis(2-hydroxyethyl)toluidin, N,N-Bis(2-hydroxypropyl)anilin, N,N-Bis(2-hydroxypropyl)toluidin, N,N-Bis(3-methacryloyl-2-hydroxypropyl)-p-toluidin, N,N-Dibutoxyhydroxypropyl-p-toluidin und 4,4'-Bis(dimethylamino)diphenylmethan.

Polymere Amine, wie solche die durch Polykondensation von N,N-Bis(hydroxyalkyl)anilin mit Dicarbonsäuren oder durch Polyaddition von Ethylenoxid und diese Amine erhalten werden, sind ebenso als Beschleuniger geeignet.

Geeignete Metallsalze sind, zum Beispiel Cobaltoctoat oder Cobaltnaphthenoat sowie Vanadium-, Kalium-, Kalzium-, Kupfer-, Eisen-, Mangan- oder Zirkoniumcarboxylate.

Der Beschleuniger wird in einer Menge von 0,01 bis 10 Gew.-%, bevorzugt 0,2 bis 5 Gew.-%, bezogen auf die Harzmischung, eingesetzt.

Die Harzmischung kann ferner einen Co-Beschleuniger enthalten, insbesondere, wenn eine Übergangsmetallverbindung als Beschleuniger verwendet wird. Abhängig von der gewählten Übergangsmetallverbindung ist der Fachmann in der Lage, einen geeigneten Co-Beschleuniger auszuwählen, um die gewünschten Aushärteeigenschaften zu erreichen. Wird eine Kobaltverbindung als Beschleuniger verwendet, ist der Co-Beschleuniger bevorzugt ein Amin und/oder eine 1,3-Dioxoverbindung. Wird eine Kupferverbindung als Beschleuniger verwendet, ist der Co-Beschleuniger bevorzugt ein Amin, ein Acetoacetamid, ein Kaliumsalz, ein Imidazol und/oder ein Gallat oder Gemische davon. Wird eine Manganverbindung als Beschleuniger verwendet, ist der Co-Beschleuniger bevorzugt eine 1,3-Dioxoverbindung, ein Thiol und/oder ein Kalium- oder Lithiumsalz oder Gemische davon. Wird eine Eisenverbindung als Beschleuniger verwendet, ist der Co-Beschleuniger bevorzugt eine 1,3-Dioxoverbindung und/oder ein Thiol, bevorzugt in Kombination mit einem Alkalimetallsalz. Geeignete 1,3-Dioxoverbindungen sind Acetylaceton, Acetoacetate und Acetoacetamide.

Die Menge an Co-Beschleuniger in der Harzmischung kann stark variieren und liegt bevorzugt im Bereich von mehr als 0,01 Gew.-% und weniger als 10 Gew.-%, bevorzugt mehr als 0,1 Gew.-% und weniger als 5 Gew.-%.

Der Beschleuniger und gegebenenfalls der Co-Beschleuniger kann/können zusammen mit dem gegebenenfalls weiteren Reaktivverdünner einzeln oder als Gemisch dem Harz-Masterbatch zugegeben werden. Alternativ, kann der Beschleuniger gegebenenfalls zusammen mit dem Co-Beschleuniger dem bereits mit Reaktivverdünner versetzten Harz-Masterbatch zugegeben werden.

**Stufe (III)**

Nach Bereitstellen der Primärzusammensetzung in Stufe (I) und Zugabe eines Beschleunigers in Stufe (II) wird

erfindungsgemäß in Stufe (III) der erhaltenen Zusammensetzung ein phenolischer Polymerisationsinhibitor zugegeben, um die Gelzeit des Reaktionsharzes auf einen auf die beabsichtigte Anwendung abgestimmten Wert einzustellen.

Die Zugabe des phenolischen Polymerisationsinhibitors kann nach einer gewissen Verweilzeit, die ebenfalls im Bereich mehrerer Minuten liegt, der nach Stufe (II) erhaltenen Zusammensetzung erfolgen. Alternativ kann die Zugabe des phenolischen Polymerisationsinhibitors auch zusammen mit dem Beschleuniger in Stufe (II) erfolgen, so dass die Stufe (II) und (III) als eine Stufe ausgeführt werden.

Als phenolische Inhibitoren, die oft Bestandteil von kommerziellen radikalisch härtenden Reaktionsharzen sind, sind Phenole, wie 2-Methoxyphenol, 4-Methoxyphenol, 2,6-Di-tert-butyl-4-methylphenol, 2,4-Di-tert-butylphenol, 2,6-Di-tert-butylphenol, 2,4,6-Trimethylphenol, 2,4,6-Tris(dimethylaminomethyl)phenol, 4,4'-Thio-bis(3-methyl-6-tert-butylphenol), 4,4'-Isopropylidendiphenol, 6,6'-Di-tert-butyl-4,4'-bis(2,6-di-tert-butylphenol), 1,3,5-Trimethyl-2,4,6-tris(3,5-di-tert-butyl-4-hydroxybenzyl)benzol, 2,2'-Methylen-di-p-cresol, Brenzkatechin und Butylbrenzkatechine, wie 4-tert-Butylbrenzkatechin, 4,6-Di-tert-butylbrenzkatechin, Hydrochinone, wie Hydrochinon, 2-Methylhydrochinon, 2-tert-Butylhydrochinon, 2,5-Di-tert-butylhydrochinon, 2,6-Di-tert-butylhydrochinon, 2,6-Dimethylhydrochinon, 2,3,5-Trimethylhydrochinon, Benzochinon, 2,3,5,6-Tetrachloro-1,4-tbenzochinon, Methylbenzochinon, 2,6-Dimethylbenzochinon, Napthochinon, oder Gemische von zweien oder mehreren davon, in Frage.

Der phenolische Polymerisationsinhibitor ist in einer Menge von 0,005 bis 3 Gew.-%, vorzugsweise 0,01 bis 1 Gew.-%, bezogen auf die Harzmischung, enthalten.

Wie bereits bei Schritt (i) beschrieben kann zusätzlich zu dem phenolischen Polymerisationsinhibitor ein *N*-Oxyl-Radikal als weiterer nicht-phenolischer Polymerisationsinihitbor zusammen mit oder nach der Zugabe des phenolischen Polymerisationsinhibitors zugegeben werden.

Der Harz-Masterbatch kann gegebenenfalls bereits mindestens einen Reaktivverdünner enthalten. Dabei kann, wie bereits erwähnt, der Überschuss an hydroxyfunktionalisierter (Meth)acrylatverbindung als Reaktivverdünner fungieren. Daneben, wenn die hydroxyfunktionalisierte (Meth)acrylatverbindung in etwa äquimolaren Mengen mit der Isocyanatgruppe eingesetzt wird, oder zusätzlich, falls ein Überschuss an hydroxyfunktionalisierte (Meth)acrylatverbindung verwendet wird, können weitere Reaktivverdünner dem Reaktionsgemisch zugegeben werden, welche strukturell von dem hydroxyfunktionalisierten (Meth)acrylatverbindung verschieden sind.

Geeignete Reaktivverdünner sind niederviskose, radikalisch co-polymerisierbare Verbindungen, bevorzugt kennzeichnungsfreie Verbindungen, die zugegeben werden um unter anderem die Viskosität der Vinylesterurethanharze bzw. der Vorstufen bei deren Herstellung anzupassen, falls erforderlich.

Geeignete Reaktivverdünner sind in den Anmeldungen EP 1 935 860 A1 und DE 195 31 649 A1 beschrieben. Vorzugsweise enthält die Harzmischung als Reaktivverdünner einen (Meth)acrylsäureester, wobei besonders bevorzugt aliphatische oder aromatische $C_5$-$C_{15}$-(Meth)acrylate ausgewählt werden. Geeignete Beispiele umfassen: Hydroxypropyl(meth)acrylat, 1,2-Ethandioldi(meth)acrylat, 1,3-Propandioldi(meth)acrylat, 1,2-Butandioldi(meth)acrylat, 1,4-Butandioldi(meth)acrylat, Trimethylolpropantri(meth)acrylat, Phenethyl(meth)acrylat, Tetrahydrofurfuryl(meth)acrylat, Ethyltriglykol(meth)acrylat, *N,N*-Dimethylaminoethyl(meth)acrylat, *N,N*-Dimethylaminomethyl(meth)acrylat, Acetoacetoxyethyl(meth)acrylat, Isobornyl(meth)acrylat, 2-Ethylhexyl(meth)acrylat, Diethylenglykoldi(meth)acrylat, Methoxypolyethylenglykolmono(meth)acrylat, Trimethylcyclohexyl(meth)acrylat, 2-Hydroxyethyl(meth)acrylat, Dicyclopentenyloxyethyl(meth)acrylat und/oder Tricyclopentadienyldi(meth)acrylat, Bisphenol-A-(meth)acrylat, Novolakepoxidi(meth)acrylat, Di-[(meth)acryloyl-maleoyl]-tricyclo-5.2.1.0.$2.^{2.6}$-decan, Dicyclopentenyloxyethylcrotonat, 3-(Meth)acryloyl-oxymethyl-tricylo-5.2.1.$0.^{2.6}$-decan, 3-(Meth)cyclopentadienyl(meth)acrylat, Isobornyl(meth)acrylat und Decalyl-2-(meth)acrylat; PEG-di(meth)acrylate, wie PEG200-di(meth)acrylat, Tetraehtylenglykoldi(meth)acrylat, Solketal(meth)acrylat, Cyclohexyl(meth)acrylat, Phenoxyethyldi(meth)acrylat, Methoxyethyl(meth)acrylat, Tetrahydrofurfuryl(meth)acrylat, *tert*-Butyl(meth)acrylat und Norbornyl(meth)acrylat. Grundsätzlich können auch andere übliche radikalisch polymerisierbaren Verbindungen, allein oder im Gemisch mit den (Meth)acrylsäureestern, eingesetzt werden, z. B. Styrol, $\alpha$-Methylstyrol, alkylierte Styrole, wie *tert*-Butylstyrol, Divinylbenzol und Allylverbindungen, wobei die nicht kennzeichnungspflichtigen Vertreter davon bevorzugt sind.

Der bzw. die Reaktivverdünner wird bevorzugt in einer Menge von 0 bis 80 Gew.-%, besonders bevorzugt 30 bis 60 Gew.-%, bezogen auf die Harzmischung, zugegeben.

Ein weiterer Gegenstand der Erfindung betrifft eine Harzmischung, welche nach dem erfindungsgemäßen, eben beschriebenen Verfahren erhalten wird.

Der Anteil des Harz-Masterbatches wird bevorzugt so gewählt, dass die Menge des Basisharzes zwischen 20 und 100 Gew.-%, bevorzugt zwischen 20 und 60 Gew.-%, bezogen auf die Harzmischung, entspricht.

Die erfindungsgemäß hergestellten Reaktionsharzmörtel zeichnen sich durch eine besonders geringe Gelzeitdrift und somit durch eine gute Lagerstabilität aus.

Die erfindungsgemäß hergestellten Harzmischungen sind in vielen Bereichen, bei denen ungesättigte Polyesterharze, Vinylesterharze und Vinylesterurethanharze Verwendung finden, einsetzbar. Sie können insbesondere zur Herstellung von Reaktionsharzmörteln für bauliche Anwendungen, wie die chemische Befestigung verwendet werden.

Zur Herstellung von Reaktionsharzmörtel für bauliche Anwendungen, inbesondere die chemische Befestigung

können der erfindungsgemäßen Harzmischung übliche anorganische und/oder organische Zuschlagstoffe zugegeben werden, wie Füllstoffe und/oder weitere Additive.

Der Anteil der Harzmischung in dem Reaktionsharzmörtel beträgt bevorzugt 10 bis 70 Gew.-%, stärker bevorzugt 30 bis 50 Gew.-%, bezogen auf den Reaktionsharzmörtel.

Dementsprechend beträgt der Anteil der Zuschlagstoffe bevorzugt 90 bis 30 Gew.-%, stärker bevorzugt 70 bis 50 Gew.-%, bezogen auf den Reaktionsharzmörtel.

Als Füllstoffe finden übliche Füllstoffe, vorzugsweise mineralische oder mineralähnliche Füllstoffe, wie Quarz, Glas, Sand, Quarzsand, Quarzmehl, Porzellan, Korund, Keramik, Talkum, Kieselsäure (z. B. pyrogene Kieselsäure), Silikate, Ton, Titandioxid, Kreide, Schwerspat, Feldspat, Basalt, Aluminiumhydroxid, Granit oder Sandstein, polymere Füllstoffe, wie Duroplaste, hydraulisch härtbare Füllstoffe, wie Gips, Branntkalk oder Zement (z. B. Tonerd- oder Portlandzement), Metalle, wie Aluminium, Russ, ferner Holz, mineralische oder organische Fasern, oder dergleichen, oder Gemische von zwei oder mehr davon, die als Pulver, in körniger Form oder in Form von Formkörpern zugesetzt sein können, Verwendung. Die Füllstoffe können in beliebigen Formen vorliegen, beispielsweise als Pulver oder Mehl oder als Formkörper, z. B. in Zylinder-, Ring-, Kugel-, Plättchen-, Stäbchen-, Sattel- oder Kristallform, oder ferner in Faserform (fibrilläre Füllstoffe), und die entsprechenden Grundteilchen haben vorzugsweise einen maximalen Durchmesser von 10 mm. Füllstoffe liegen in der jeweiligen Komponente vorzugsweise in einer Menge von bis zu 90, insbesondere 3 bis 85, vor allem 5 bis 70 Gew.-% vorhanden. Weitere mögliche Additive sind ferner Thixotropiermittel, wie gegebenenfalls organisch nachbehandelte pyrogene Kieselsäure, Bentonite, Alkyl- und Methylcellulosen, Rhizinusölderivate oder dergleichen, Weichmacher, wie Phthalsäure- oder Sebacinsäureester, Stabilisatoren, Antistatikmittel, Verdickungsmittel, Flexibilisatoren, Härtungskatalysatoren, Rheologiehilfsmittel, Netzmittel, färbende Zusätze, wie Farbstoffe oder insbesondere Pigmente, beispielsweise zum unterschiedlichen Anfärben der Komponenten zur besseren Kontrolle von deren Durchmischung, oder dergleichen, oder Gemische von zwei oder mehr davon, möglich. Auch nicht reaktive Verdünnungsmittel (Lösungsmittel) können, vorzugsweise in einer Menge bis zu 30 Gew.-%, bezogen auf die jeweilige Komponente (Reaktionsharzmörtel, Härter), beispielsweise von 1 bis 20 Gew.-%, vorliegen, wie Niederalkylketone, z. B. Aceton, Diniederalkyl-niederalkanoylamide, wie Dimethylacetamid, Niederalkylbenzole, wie Xylole oder Toluol, Phthalsäureester oder Paraffine, oder Wasser.

Die folgenden Beispiele dienen der weiteren Erläuterung der Erfindung.

## BEISPIELE

Es wurden wie nachfolgend beschrieben Harzmischungen und diese enthaltende Reaktionsharzmörtel hergestellt und die Veränderung der Gelzeit nach Lagerung über einen gewissen Zeitraum untersucht.

Dazu werden die hergestellten Harzmischungen und Reaktionsharzmörtel mit einem Härter im Volumenverhältnis 3:1 bzw. 5:1 mittels eines Statikmischers vermischt. Der Härter wurde für alle Beispiele wie folgt hergestellt:

48,5 g einer wässrigen Dispersion von Dibenzoylperoxid (30%-ig), 48 g Quarzmehl, 0,5 g Schichtsilikat und 3 g hydrophile Kieselsäure wurden per Hand vorgemischt und anschließend im Dissolver homogen vermischt.

*Bestimmung der Gelzeit*

Zur Bestimmung der Gelzeit werden die Harzmischungen bzw. die Reaktionsharzmörtel und der Härter mit Hilfe eines statischen Mischers vermischt, in ein Reagenzglas eingefüllt und in eine Vorrichtung eingespannt, die einen Stempel in der Mörtelmasse bewegt, solange das aufgrund der Konsistenz der Mörtelmasse möglich ist. Das Erstarren der Mörtelmasse wird festgestellt und entspricht dem Ende der Verarbeitungszeit. Die Zeit bis zum Erstarren wird erfasst und als Gelzeit bezeichnet.

*Bestimmung der Gelzeitdrift*

Zur Bestimmung der Gelzeitdrift werden die Harzmischungen und die Reaktionsharzmörtel über die in Tabelle 1 angegebenen Zeiträume bei +23°C und bei +40°C gelagert und dann mit der Härterkomponente vermischt und die Gelzeit bestimmt.

Die Gelzeitdrift (GtD) wurde anhand der nachfolgenden Formel mit zwei Werten für Gelzeiten, die nach unterschiedlich langen Lagerzeiten der Harzmischungen bzw. der Reaktionsharzmörtel bestimmt wurden, berechnet.

$$\mathrm{GtD} = \frac{\mathrm{T}_{25-80\ \mathrm{nach\ x-Tagen}} - \mathrm{T}_{25-80\ \mathrm{nach\ 1\ Tag}}}{\mathrm{T}_{25-80\ \mathrm{nach\ einem\ Tag}}} \times 100\%$$

**Beispiel 1 (Harzmischung):**

203,4 g Diphenylmethandiisocyanat werden mit 0,07 g Dioctylzinndilaurat (TIB KAT® 216; TIB Chemicals AG) versetzt. 15,89 g Dipropylenglycol werden langsam unter kräftigem Rühren zugetropft. Die Innentemperatur steigt dabei auf ca. 70 - 90°C. Nach Beendigung der Zugabe werden 0,08 g Phenothiazin sowie 0,14 g 2,2,6,6-Tetramethylpiperidinyl-1-oxyl zugegeben und anschließend ohne Heizen noch 30 min gerührt. Anschließend werden 365,1 g Hydroxypropylmethacrylat bei ca. 40°C zugetropft. Die Innentemperatur steigt auf ca. 115°C an. Der Reaktionsansatz wird nach Beendigung des Zutropfens noch solange weiter gerührt, bis der NCO-Gehalt unter 0,3 % gefallen ist (Titration: DIN EN 1242). Die Innentemperatur darf dabei nicht unter 60°C sinken.

Nach Beendigung der Nachreaktion werden weitere 0,3 g 2,2,6,6-Tetramethylpiperidinyl-1-oxyl zugegeben und über 15 min gelöst. Anschließend werden 23 g N,N-Bis(2-hydroxypropyl)-p-toluidin zudosiert. Um die Reaktivität des Reaktionsharzmörtels (Beispiel 3) auf 7 Minuten einzustellen, werden 3,6 g t-Butylbrenzcatechin, zugegeben und ca. 30 min unter Rühren gelöst. Im Anschluss werden 320 g 1,4-Butandioldimethacrylat zudosiert. Der gesamte Reaktionsansatz wird unter Rühren auf ca. 30°C abgekühlt.

Nach Lagerung über Nacht und nach 168 Tagen bei 25°C sowie nach 106 Tagen bei 40°C wurden die Harzmischungen jeweils mit 30 g Perkadox 20S (20% Benzoylperoxid, pulverförmig in inerten Füllstoffen; Akzo Nobel) vermischt und ausgehärtet. Die Werte sind in der Tabelle 1 angegeben.

**Beispiel 2 (Reaktionsharzmörtel)**

Zur Herstellung des Reaktionsharzmörtels werden 380 g der Harzmischung aus Beispielen 1, 390 g Quarzsand, 200 g Portlandzement sowie 30 g pyrogener Kieselsäure per Hand vorgemischt und anschließend im Dissolver homogen vermischt.

Der Reaktionsharzmörtel wurde mit dem Härter im Volumenverhältnis 5:1 mittels eines Statikmischers vermischt.

Nach Lagerung über Nacht und nach 106 Tagen bei 25°C sowie nach 109 Tagen bei 40°C wurden die Reaktionsharzmörtel jeweils mit dem oben beschriebenen Härter vermischt und ausgehärtet. Die Werte sind in der Tabelle 1 angegeben.

**Vergleichsbeispiel 1 (Harzmischung)**

203,4 g Diphenylmethandiisocyanat werden mit 0,07 g Dioctylzinndilaurat (TIB KAT® 216; TIB Chemicals AG) versetzt. 15,89 g Dipropylenglycol werden langsam unter kräftigem Rühren zugetropft. Die Innentemperatur steigt dabei auf ca. 70 - 90°C. Nach Beendigung der Zugabe werden 0,11 g 2,6-Di-tert-butyl-p-cresol sowie 0,14 g 2,2,6,6-Tetramethylpiperidinyl-1-oxyl zugegeben und anschließend ohne Heizen noch 30 min gerührt. Anschließend werden 365,1 g Hydroxypropylmethacrylat bei ca. 40°C zugetropft. Die Innentemperatur steigt auf ca. 115°C an. Der Reaktionsansatz wird nach Beendigung des Zutropfens noch solange weiter gerührt, bis der NCO-Gehalt unter 0,3 % gefallen ist (Titration: DIN EN 1242). Die Innentemperatur darf dabei nicht unter 60°C sinken.

Nach Beendigung der Nachreaktion werden weitere 0,3 g 2,2,6,6-Tetramethylpiperidinyl-1-oxyl zugegeben und über 15 min gelöst. Um die Reaktivität des Reaktionsharzmörtels (Vergleichsbeispiel 4) auf 7 Minuten einzustellen, werden 3,6 g t-Butylbrenzcatechin, zugegeben und ca. 30 min unter Rühren gelöst. Anschließend werden 23 g N,N-Bis(2-hydroxypropyl)-p-toluidin zudosiert. Im Anschluss werden 320 g 1,4-Butandiol-dimethacrylat zudosiert. Der gesamte Reaktionsansatz wird unter Rühren auf ca. 30°C abgekühlt.

Nach Lagerung über Nacht und nach 199 Tagen bei 25°C sowie nach 190 Tagen bei 40°C wurden die Harzmischungen jeweils mit 30 g Perkadox 20S (20% Benzoylperoxid, pulverförmig in inerten Füllstoffen; Akzo Nobel) vermischt und ausgehärtet. Die Werte sind in der Tabelle 1 angegeben.

**Vergleichsbeispiel 2 (Reaktionsharzmörtel)**

Zur Herstellung des Reaktionsharzmörtels werden 380 g der Harzmischung aus Vergleichsbeispiel 1, 390 g Quarzsand, 200 g Portlandzement sowie 30 g pyrogener Kieselsäure per Hand vorgemischt und anschließend im Dissolver homogen vermischt. Der Reaktionsharzmörtel wurde mit dem Härter im Volumenverhältnis 5:1 mittels eines Statikmischers vermischt.

Nach Lagerung über Nacht und nach 64 Tagen bei 25°C sowie nach 67 Tagen bei 40°C wurden die Reaktionsharzmörtel jeweils mit dem oben beschriebenen Härter vermischt und ausgehärtet. Die Werte sind in der Tabelle 1 angegeben.

**Tabelle 1:** Ergebnisse der Bestimmung der Gelzeit und des Gelzeitdrifts für die Beispiele 1 und 2 sowie Vergleichsbeispiele 1 und 2

| Beispiel Lagerung | 1 (Harzmischung) | | | Vergleich 1 (Harzmischung) | | | 2 (Reaktionsharzmörtel) | | | Vergleich 2 (Reaktionsharzmörtel) | | |
|---|---|---|---|---|---|---|---|---|---|---|---|---|
| | **über Nacht 23°C** | **168 d 23°C** | **106 d 40°C** | **über Nacht 23°C** | **199 d 23°C** | **190 d 40°C** | **über Nacht 23°C** | **106 d 23°C** | **109 d 40°C** | **über Nacht 23°C** | **64 d 23°C** | **67 d 40°C** |
| $t_{gel}$(25-80) [min] | 06:48 | 06:30 | 06:39 | 06:50 | 06:34 | 05:55 | 06:19 | 06:21 | 06:33 | 06:43 | 06:30 | 06:15 |
| $t_{peak}$ [min] | 07:28 | 07:07 | 06:35 | 07:27 | 07:09 | 06:46 | 06:44 | 07:02 | 07:00 | 07:15 | 06:51 | 06:54 |
| $T_{peak\ max}$ | 160°C | 153°C | 156°C | 160°C | 154°C | 157°C | 94°C | 91°C | 96°C | 90°C | 99°C | 95°C |
| GtD (23°C) | | 4% | | | 4% | | | 0,5% | | | 3% | |
| GtD (40°C) | | | 2% | | | 13% | | | 4% | | | 7% |

Aus dem Beispiel 1 und dem Vergleichsbeispiel 1 wird ersichtlich, dass während der Lagerung bei Raumtemperatur das Phenothiazin keinen anderen Einfluss auf die Gelzeitdrift hat als der phenolische Inhibitor BHT. Wird jedoch bei einer erhöhten Temperatur (40°C) gelagert, zeigt sich mit nur 2% Gelzeitdrift eine deutliche Verringerung der Gelzeitdrift bei Beispiel 1 gegenüber Vergleichsbeispiel 1 mit 13 % Gelzeitdrift.

Daraus ist ersichtlich, dass bei den nach dem erfindungsgemäßen Verfahren hergestellten Harzmischungen die Gelzeitdrift wesentlich weniger Temperatureinflüssen unterliegt so dass eine Lagerung bei Temperaturen oberhalb 23°C - was häufig im Sommer der Fall ist - sich wesentlich weniger drastisch auf die Verarbeitungszeit auswirkt.

Da die erfindungsgemäß hergestellten Harzmischungen insbesondere für die Herstellung von Reaktionsharzmörtel-Massen zur Verwendung in der chemischen Befestigungstechnik verwendet werden, wurde auch der Einfluss eine alkalischen Milieus, wie es in der anorganisch gefüllten Harzmischung (Reaktionsharzmörtel) vorliegt, auf die Gelzeitdrift untersucht. Hier wird ein negativer Einfluss auf den bzw. die verwendeten Polymerisationsinhibitoren erwartet, was sich in der Gelzeitdrift niederschlagen sollte.

Unerwartet ist die Gelzeitdrift bei Beispiel 2 geringer als bei Vergleichsbeispiel 2 mit 3 % und zwar sowohl bei nach Lagerung bei Raumtemperatur (0,5 % verglichen mit 3 %) als auch nach Lagerung bei erhöhter Temperatur (40°C) (4 % verglichen mit 7 %), wobei der Vorteil der Reaktionsharzmörtel-Masse, die mit der erfindungsgemäß hergestellten Harzmischung hergestellt wurde, bei erhöhter Temperatur deutlicher ist.

**Beispiel 3 (Harzmischung):**

463,47 g Hydroxypropylmethacrylat werden vollständig im Reaktor vorgelegt, mit 0,2 g 2,2,6,6-Tetramethylpiperidinyl-1-oxyl, 0,1 g Phenothiazin sowie 0,16 g Dioctylzinndilaurat (TIB KAT® 216; TIB Chemicals AG) versetzt und auf 60°C erwärmt. Anschließend werden 231,1 g polymeres Diphenylmethandiisocyanat unter Rühren zugetropft, wobei die Innentemperatur auf ca. 80°C - 90°C ansteigt. Nach Beendigung der Zugabe wird der Ansatz noch solange weiter gerührt bis der NCO-Gehalt unter 0,3% gefallen ist (Titration: DIN EN 1242). Die Innentemperatur darf dabei nicht unter 60°C sinken.

Nach Beendigung der Nachreaktion werden weitere 0,27 g 2,2,6,6-Tetramethylpiperidinyl-1-oxyl zugegeben und über 15 min gelöst. Anschließend werden 18 g N,N-Bis(2-hydroxypropyl)-p-toluidin zudosiert. Um die Reaktivität des Reaktionsharzmörtels (Beispiel 4) auf 5 Minuten einzustellen, werden 3 g t-Butylbrenzcatechin zugegeben und ca. 30 min unter Rühren gelöst. Im Anschluss werden 201 g Hydroxypropylmethacrylat und 53,5g 1,4-Butandioldimethacrylat zudosiert. Der gesamte Reaktionsansatz wird unter Rühren auf ca. 30°C abgekühlt.

Nach Lagerung über Nacht und nach 88 Tagen bei 23°C sowie nach 71 Tagen bei 40°C wurden die Harzmischungen jeweils mit 30 g Perkadox 20S (20% Benzoylperoxid, pulverförmig in inerten Füllstoffen; Akzo Nobel) vermischt und ausgehärtet. Die Werte sind in der Tabelle 2 angegeben.

**Beispiel 4 (Reaktionsharzmörtel)**

Zur Herstellung des Reaktionsharzmörtels werden 480 g der Harzmischung aus Beispiel 3, 290 g Quarzsand, 200 g Portlandzement sowie 30 g pyrogener Kieselsäure per Hand vorgemischt und anschließend im Dissolver homogen vermischt.

Der Reaktionsharzmörtel wurde mit dem Härter im Volumenverhältnis 3:1 mittels eines Statikmischers vermischt.

Nach Lagerung über Nacht und nach 65 Tagen bei 23°C sowie nach 42 Tagen bei 40°C wurden die Reaktionsharzmörtel jeweils mit dem oben beschriebenen Härter vermischt und ausgehärtet. Die Werte sind in der Tabelle 2 angegeben.

**Vergleichsbeispiel 3 (Harzmischung)**

463,47 g Hydroxypropylmethacrylat werden vollständig im Reaktor vorgelegt, mit 0,2 g 2,2,6,6-Tetramethylpiperidinyl-1-oxyl, 0,115 g 2,6-Di-tert-butyl-p-cresol sowie 0,16g Dioctylzinndilaurat (TIB KAT® 216; TIB Chemicals AG) versetzt und auf 60°C erwärmt. Anschließend werden 231,1 g polymeres Diphenylmethandiisocyanat unter Rühren zugetropft, wobei die Innentemperatur auf ca. 80°C - 90°C ansteigt. Nach Beendigung der Zugabe wird der Ansatz noch solange weiter gerührt bis der NCO-Gehalt unter 0,3% gefallen ist (Titration: DIN EN 1242). Die Innentemperatur darf dabei nicht unter 60°C sinken.

Nach Beendigung der Nachreaktion werden weitere 0,27 g 2,2,6,6-Tetramethylpiperidinyl-1-oxyl zugegeben und über 15 min gelöst. Um die Reaktivität des Reaktionsharzmörtels (Vergleichsbeispiel 4) auf 5 Minuten einzustellen, werden 3 g t-Butylbrenzcatechin zugegeben und ca. 30 min unter Rühren gelöst. Anschließend werden 18 g N,N-Bis(2-hydroxypropyl)-p-toluidin zudosiert. Im Anschluss werden 201 g Hydroxypropylmethacrylat und 53,5 g 1,4-Butandioldimethacrylat zudosiert. Der gesamte Reaktionsansatz wird unter Rühren auf ca. 30°C abgekühlt.

**Vergleichsbeispiel 4 (Reaktionsharzmörtel)**

Zur Herstellung des Reaktionsharzmörtels werden 480 g der Harzmischung aus Vergleichsbeispiel 3, 290 g Quarzsand, 200 g Portlandzement sowie 30 g pyrogener Kieselsäure per Hand vorgemischt und anschließend im Dissolver homogen vermischt.
Der Reaktionsharzmörtel wurde mit dem Härter im Volumenverhältnis 3:1 mittels eines Statikmischers vermischt.
Nach Lagerung über Nacht und nach 54 Tagen bei 23°C sowie nach 45 Tagen bei 40°C wurden die Reaktionsharzmörtel jeweils mit dem oben beschriebenen Härter vermischt und ausgehärtet. Die Werte sind in der Tabelle 2 angegeben.

**Tabelle 2:** Ergebnisse der Bestimmung der Gelzeit und des Gelzeitdrifts für die Beispiele 3 und 4 sowie Vergleichsbeispiele 3 und 4

| **Beispiel** | **3 (Harzmischung)** | | | **Vergleich 3 (Harzmischung)** | | **4 (Reaktionsharzmörtel)** | | | **Vergleich 4 (Reaktionsharzmörtel)** | | |
|---|---|---|---|---|---|---|---|---|---|---|---|
| **Lagerung** | **über Nacht 23°C** | **88 d 23°C** | **71 d 40°C** | **über Nacht 23°C** | **89 d 23°C** | **über Nacht 23°C** | **65 d 23°C** | **42 d 40°C** | **über Nacht 23°C** | **54 d 23°C** | **54 d 40°C** |
| $t_{gel}$(25-80) [min] | 05:49 | 05:11 | 05:46 | 05:05 | 05:39 | 06:54 | 06:08 | 05:50 | 06:47 | 05:33 | 05:38 |
| $t_{peak}$ [min] | 07:02 | 05:48 | 06:25 | 05:50 | 06:28 | 07:08 | 06:31 | 06:05 | 07:04 | 05:58 | 05:53 |
| $T_{peak\ max}$ | 145°C | 152°C | 148°C | 160°C | 154°C | 86°C | 85°C | 88°C | 82°C | 85°C | 89°C |
| GtD (23°C) | | 11% | | | 11% | | 11% | | | 18% | |
| GtD (40°C) | | | 1% | | | | | 15% | | | 17% |

Aus dem Beispiel 3 und dem Vergleichsbeispiel 3 wird ersichtlich, dass während der Lagerung bei Raumtemperatur das Phenothiazin keinen anderen Einfluss auf die Gelzeitdrift hat als der phenolische Inhibitor BHT. Wird jedoch bei einer erhöhten Temperatur (40°C) gelagert, zeigt sich mit nur 1 % Gelzeitdrift eine sehr geringe Verringerung der Gelzeitdrift bei Beispiel 3.

Auch ist die Gelzeitdrift bei Beispiel 4 geringer als bei Vergleichsbeispiel 3 und zwar sowohl bei nach Lagerung bei Raumtemperatur (11 % verglichen mit 18 %) als auch nach Lagerung bei erhöhter Temperatur (40°C) (15 % verglichen mit 17 %), wobei der Vorteil der Reaktionsharzmörtel-Masse, die mit der erfindungsgemäß hergestellten Harzmischung hergestellt wurde, bei Raumtemperatur deutlicher ist.

Anhand der Beispiele und Vergleichsbeispiele konnte gezeigt werden, dass mit einer Veränderung der Reihenfolge der Zugabe des phenolischen Inhibitors und der aromatischen Aminoverbindung gegenüber den Vergleichsbeispielen (analog EP 1716205 A1), bei denen die Additive in der genannten Reihenfolge zugegeben wurden, bei den erfindungsgemäßen Beispielen, bei denen zuerst Phenothiazin, dann die armomatische Aminoverbindung und zuletzt der phenolische Inhibitor zugegeben wurden, zum Teil eine Verringerung der Gelzeitdrift erreicht werden konnte.

## Patentansprüche

1. Verfahren zur Herstellung einer Harzmischung, welche ein Vinylesterurethanharz, Phenothiazin oder ein Derivat davon, einen Beschleuniger und einen phenolischen Polymerisationsinhibitor enthält, wobei das Verfahren folgende Schritte umfasst:

   (i) Bereitstellen einer Primärzusammensetzung enthaltend das Vinylesterurethanharz und Phenothiazin oder ein Derivat davon;
   (ii) Zugeben eines Beschleunigers zu der nach Schritt (i) erhaltenen Primärzusammensetzung; und
   (iii) Zugeben eines phenolischen Polymerisationsinhibitors zu der nach Schritt (ii) erhaltenen Zusammensetzung, wobei die Harzmischung erhalten wird.

2. Verfahren nach Anspruch 1 worin das Phenothiazin-Derivat unter Verbindungen mit den allgemeinen Strukturformeln ausgewählt ist:

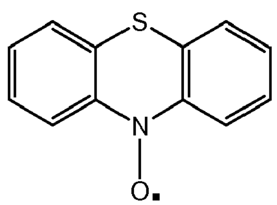

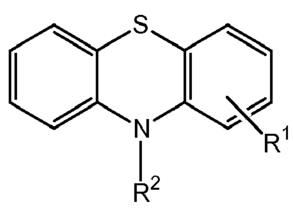

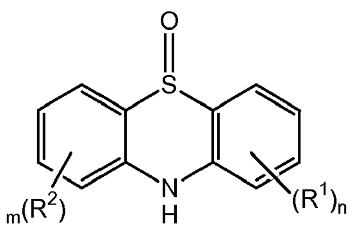

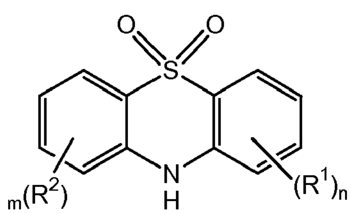

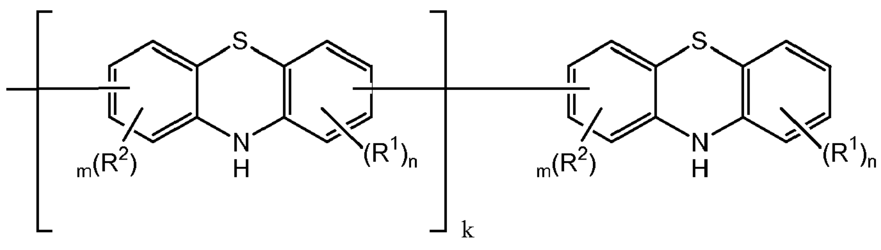

   in denen $R^1$ und $R^2$ gleich oder verschieden, H, Halogen, $C_1$-$C_{20}$-Alkyl oder Aryl, $-SO_3H$ oder $-SO_3^-M^+$ sein kann, mit m = 1 bis 4, n = 1 bis 4 und k = 1 bis 8.

**3.** Verfahren nach Anspruch 1 oder 2, worin der Beschleuniger unter Aminen ausgewählt wird.

**4.** Verfahren nach einem der vorhergehenden Ansprüche, worin das Vinylesterurethanharz, ein Urethan(meth)actrylatharz ist.

**5.** Verfahren nach Anspruch 4, worin das Urethan(meth)acrylatharz ein Urethan(meth)acrylatharz auf Basis eines aromatischen Isocyanats ist.

**6.** Verfahren nach einem der vorhergehenden Ansprüche, worin in Schritt (i) und/oder Schritt (ii) und/oder Schritt (iii) ein Reaktivverdünner zu der Zusammensetzung gegeben wird.

**7.** Verfahren nach einem der vorhergehenden Ansprüche, worin in Schritt (i) und/oder in oder nach Schritt (iii) ein weiterer nicht-phenolischer Polymerisationsinhibitor zugegeben wird.

**8.** Verfahren nach Anspruch 7, worin der nicht-phenolische Polymerisationsinhibitor unter stabilen N-Oxyl-Radikalen ausgewählt wird.

**9.** Verfahren nach Anspruch 8, worin das N-Oxyl-Radikal ein Piperidinyl-N-oxyl oder Tetrahydropyrrol-N-oxyl ist.

**10.** Harzmischung, welche ein Urethan(meth)acrylatharz, Phenothiazin oder ein Derivat davon, einen Beschleuniger und einen phenolischen Polymerisationsinhibitor enthält, hergestellt nach einem Verfahren gemäß einem der Ansprüche 1 bis 9.

**11.** Verwendung einer Harzmischung nach Anspruch 10 zur Herstellung eines Reaktionsharzmörtels, enthaltend die Harzmischung und anorganische und/oder organische Zuschlagstoffe.

**12.** Verwendung einer Harzmischung nach Anspruch 10 oder eines nach Anspruch 11 erhältlichen Reaktionsharzmörtels für bauliche Anwendungen.

**13.** Verwendung nach Anspruch 12 zur chemischen Befestigung.

Europäisches Patentamt
European Patent Office
Office européen des brevets

# EUROPÄISCHER RECHERCHENBERICHT

Nummer der Anmeldung
EP 13 18 9525

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 0 713 015 A1 (BASF AG [DE]; HILTI AG [LI] DSM RESINS BV [NL]; HILTI AG [LI]) 22. Mai 1996 (1996-05-22) * Seite 3, Zeile 14 - Seite 4, Zeile 41; Ansprüche 1-3; Beispiel 1 * | 1-13 | INV. C08L75/16 C08F290/14 C08K5/47 C08G18/76 C08G18/28 C08G18/32 C04B26/06 |
| X | EP 2 518 033 A2 (HILTI AG [LI]) 31. Oktober 2012 (2012-10-31) * Absätze [0041] - [0043]; Anspruch 6; Beispiel 1 * | 1-13 | |
| X | WO 2008/000452 A1 (FISCHER ARTUR WERKE GMBH [DE]; GRUEN JUERGEN [DE]; STEURER PAUL [DE];) 3. Januar 2008 (2008-01-03) * Seite 7, Zeile 12 - Seite 8, Zeile 5; Ansprüche 1-3,6-8 * | 1-13 | |
| X | JP S51 68654 A (TOYO BOSEKI) 14. Juni 1976 (1976-06-14) * Zusammenfassung * | 1-13 | RECHERCHIERTE SACHGEBIETE (IPC) |
| X | EP 0 508 183 A1 (BASF AG [DE]) 14. Oktober 1992 (1992-10-14) * Seite 5, Zeile 13 - Zeile 23; Anspruch 1 * | 1-13 | C08L C08F C08K C08G C04B |
| A | DE 199 56 509 A1 (BASF AG [DE]) 18. Januar 2001 (2001-01-18) * Ansprüche 1-6 * | 1-13 | |
| A | EP 1 935 860 A2 (HILTI AG [LI]) 25. Juni 2008 (2008-06-25) * Beispiel 1 * | 1-13 | |

Der vorliegende Recherchenbericht wurde für alle Patentansprüche erstellt

1

| Recherchenort | Abschlußdatum der Recherche | Prüfer |
|---|---|---|
| München | 17. Februar 2014 | Scheuer, Sylvie |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 13 18 9525

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-02-2014

| Im Recherchenbericht angeführtes Patentdokument | Datum der Veröffentlichung | Mitglied(er) der Patentfamilie | Datum der Veröffentlichung |
|---|---|---|---|
| EP 0713015 A1 | 22-05-1996 | AT 204058 T | 15-08-2001 |
| | | DE 4438577 A1 | 02-05-1996 |
| | | EP 0713015 A1 | 22-05-1996 |
| | | JP H08277818 A | 22-10-1996 |
| | | US 5731366 A | 24-03-1998 |
| EP 2518033 A2 | 31-10-2012 | AU 2012202455 A1 | 15-11-2012 |
| | | CN 102757532 A | 31-10-2012 |
| | | DE 102011017619 A1 | 31-10-2012 |
| | | EP 2518033 A2 | 31-10-2012 |
| | | JP 2012233184 A | 29-11-2012 |
| | | RU 2012116841 A | 10-11-2013 |
| | | US 2013112432 A1 | 09-05-2013 |
| WO 2008000452 A1 | 03-01-2008 | AT 469182 T | 15-06-2010 |
| | | CN 101484497 A | 15-07-2009 |
| | | DE 102006030044 A1 | 03-01-2008 |
| | | EP 2032622 A1 | 11-03-2009 |
| | | ES 2342627 T3 | 09-07-2010 |
| | | JP 2009541540 A | 26-11-2009 |
| | | RU 2009102800 A | 10-08-2010 |
| | | US 2009308533 A1 | 17-12-2009 |
| | | WO 2008000452 A1 | 03-01-2008 |
| JP S5168654 A | 14-06-1976 | JP S5168654 A | 14-06-1976 |
| | | JP S5738620 B2 | 17-08-1982 |
| EP 0508183 A1 | 14-10-1992 | DE 4111828 A1 | 15-10-1992 |
| | | EP 0508183 A1 | 14-10-1992 |
| DE 19956509 A1 | 18-01-2001 | KEINE | |
| EP 1935860 A2 | 25-06-2008 | AT 552223 T | 15-04-2012 |
| | | AU 2007254590 A1 | 10-07-2008 |
| | | CA 2614050 A1 | 21-06-2008 |
| | | CN 101468893 A | 01-07-2009 |
| | | EP 1935860 A2 | 25-06-2008 |
| | | ES 2382393 T3 | 07-06-2012 |
| | | JP 2008156645 A | 10-07-2008 |
| | | US 2008171807 A1 | 17-07-2008 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0713015 B1
- EP 1716204 A1
- EP 1716205 A1
- DE 2312559 A1
- DE 3536246 A1
- EP 0123081 A1
- EP 0002129 A1
- US 3629187 A
- DE 19902685 A1
- EP 0684906 A1
- DE 4111828 A1
- EP 0044352 A1
- DE 19961342
- DE 19956509 A1
- US 2011071234 A1
- EP 1935860 A1
- DE 19531649 A1